# EUROPEAN PATENT SPECIFICATION

(11) **EP 0 625 265 B1**
(45) Date of publication and mention of the grant of the patent: **13.11.1996**
(21) Application number: 93903861.8
(22) Date of filing: 04.02.1993
(51) Int. Cl.: G01N 27/403

(54) **METHOD AND ELECTRODE DEVICE FOR ELECTROCHEMICAL STRIPPING ANALYSIS**
VERFAHREN UND ELEKTRODENGERÄT ZUR ANALYSE DURCH ELEKTROCHEMISCHES ABBEIZEN
PROCEDE ET DISPOSITIF A ELECTRODES POUR ANALYSES PAR DECAPAGE ELECTROCHIMIQUE

(30) Priority: 07.02.1992 DK 153/92
(43) Date of publication of application: 23.11.1994
(73) Proprietor: RADIOMETER ANALYTICAL S.A., 69627 Villeurbanne Cedex (FR)
(72) Inventor: JAGNER, Lars-Eric, Daniel, S-433 60 Partille (SE); BITSCH, Nils, Langergaard, DK-2830 Virum (DK)
(74) Representative: Guerre, Dominique
(86) International application number: DK9300039
(87) International publication number: WO9316378

(56) References cited:
- EP-A- 0 017 236
- WO-A-86/04679
- US-A- 4 490 236

## Description

The invention relates to a method of electrochemical stripping analysis comprising an electrolysis step and a stripping step and using an electrode device comprising an electrode body carrying a working electrode, a reference electrode, and a counter electrode, said electrode device further comprising a measuring area into which the working electrode opens and wherein at least one contact point for the reference electrode and the counter electrode is located, the method comprising contacting the electrode device with a sample solution and performing the electrolysis step with the measuring area contacting at least part of the sample solution.

In this context electrochemical stripping analysis comprises analyses of the type stripping potentiometry (Potentiometric Stripping Analysis - PSA and Constant Current Stripping Analysis - CCSA) and stripping voltammetry. Said measuring methods are mostly used in the determination of heavy metals as for example Pb, Cu, Cd, Hg, Zn, Ni, and Co in various solutions such as water, wine, blood, etc.

The said electrochemical measuring methods have in common that the particular ions in the sample are at first deposited on a working electrode by means of electrolysis. The method used for stripping off the ions and the parameters monitored concurrently depend on the particular measuring method.

In Potentiometric Stripping Analysis stripping is performed by removing the electrolysis potential and stripping off the ions by spontaneous chemical reaction in the solution contacting the working electrode. While stripping off a particular type of ions, the electrode potential measured relatively to a reference electrode will lie constantly on a potential characteristic for said ion. Consequently, during stripping the electrode potential is measured as a function of time and the time the electrode remains at a particular potential is thus a measure of the sample content of a particular type of ions.

In Constant Current Stripping Analysis, stripping off the ions is controlled by sending an appropriately directed constant current through the electrode. As with PSA the measured electrode potential while stripping off one type of ions will lie constantly on a potential characteristic for said ion type and the electrode potential as a function of time is used in determining the ion content in this method as well.

In Voltammetric Stripping Analysis the ions are stripped off by applying an alternating potential across the electrode directed oppositely to the electrolysis potential. During stripping the current through the electrode will change at the respective characteristic potentials for the particular ions, and consequently the current through the electrode versus the applied potential is measured in this method. The magnitude of the current change at a particular potential is a measure of the sample content of the ion type for which said potential is characteristic.

An example of an analysis system for performing stripping potentiometry (Potentiometric Stripping Analysis - PSA and Constant Current Stripping Analysis - CCSA) is the TraceLab™ System, manufactured and marketed by Radiometer A/S, Copenhagen, Denmark. Said system comprises a potentiometric stripping unit (PSU20), a sample station (SAM20), electrode kits and analysis solution kits. System control is performed by means of a personal computer and several particular data processing programs, including programs for specific analyses (TAP21, TAP22 etc.) and a program for setting particular user-defined analyses (TAP2 TraceTalk, Method Builder and Commander). Sample beakers allowing for analysis of samples having a volume of 5 - 100 ml are provided as accessories to the sample station (SAM20).

The electrode kit for the TraceLab™ system comprises three separate electrodes consisting of a working electrode in the form of a glassy carbon electrode (type F3600) to be plated with an electro-active film, a reference electrode in the form of a calomel electrode (type K436), and a counter electrode in the form of a Pt electrode (type P136). The electro-active film of the glassy carbon electrode may comprise an Hg, an Au or an Ag/Hg film.

During use of the TraceLab™ system, the electrodes are located in an electrode head in the sample station. A stirrer is located in the middle of the electrode head, the electrodes being located at predetermined positions around said stirrer, thus preventing direct contact between the electrodes. Dipping/removing the electrodes into/from a sample is performed by lowering/lifting the entire electrode head. When lowering the electrode head, thus dipping the electrodes into a sample/other solution, electric contact is established between the electrodes through the liquid. When lifting the electrode head, thus removing the electrodes from the liquid, said contact is broken.

In the lifted position the working electrode is exposed both to drying out and to formation of contaminations on the measuring surface of the electrode due to reaction with substances in the air. Further, due to the missing contact between the electrodes, the working electrode potential is uncontrolled. This may cause uncontrolled chemical reactions on the measuring surface, thus forming contaminations on or damaging the electro-active film of the electrode. Among the above mentioned electro-active films, the Hg film is the most important, but also the weakest. When the measuring surface of the working electrode dries out or is otherwise damaged, it is necessary to remove the damaged electro-active film and apply a new film. Thus, it is absolutely necessary to minimize the time the electrodes are suspended in open air.

International Patent Application WO 86/04679, Mann, A.W. and Threlfall, H.J. discloses a cell unit for voltammetric stripping analysis eliminating some of the disadvantages mentioned above. The cell unit comprises a measuring chamber with a stirrer and including a working electrode, a reference electrode, and a counter electrode. The measuring chamber is further provided with an inlet and an outlet and is so configured that after removal of a sample from the chamber a small sample residue remains in a well in the chamber. The electrodes are located in the chamber in direct contact with said small sample residue and are in mutual electric contact through said residue. Thus, during sample exchange the working electrode is protected from drying out and from contaminations forming on the measuring surface due to an uncontrolled electrode potential. However, said cell unit has a drawback compared to separate sample beakers. As it is necessary to transfer the sample into the measuring chamber of the unit, sample handling is increased and relatively large sample volumes are demanded.

Several types of voltammetric stripping, e.g. constant current reductive stripping voltammetry and cathodic stripping voltammetry, have a further drawback in that the presence of reductive metals in the sample will substantially interfere with the analyte. For example, Zn(II) is a serious interferant in the determination of Ni(II) in tap water and in industrial plating baths, as the characteristic stripping potential for Zn(II) is close to the characteristic stripping potential for Ni(II).

Apart from the above-mentioned drawbacks, stripping potentiometry has a major drawback in that the stripping rate is very high, in particular when the sample comprises high concentrations of redox-active substances other than the analyte. Further, when the analyte concentration is low, typically below 10 nM, the stripping time for the analyte is only a few microseconds. This makes heavy demands on the analysis system and lowering the stripping rate is therefore preferable. One way of reducing said rate is to reduce the transport rate of oxidant/reductant to the electrode surface, which may be done e.g. by stopping the stirring of the sample and performing stripping in a quiet sample. However, said method is rather time-consuming, as it takes several minutes from stopping of the stirring till the sample is completely quiet and stripping may be initiated.

Another way of lowering the stripping rate is to minimize the concentration of the redox-active substances in the sample. In voltammetric analysis of samples containing a large amount of oxygen, an inactive gas, e.g. N₂ or Ar, is usually led through the sample before stripping, thus removing the oxygen from the sample. However, it takes a long time - approx. 5 min. - before the oxygen concentration is as low as not to seriously influence the stripping rate.

A third way of lowering the stripping rate is to perform the stripping in a solution other than the sample, e.g. in a solution containing a lower concentration of redox-active substances. This may be performed by flushing the sample beaker with the particular stripping solution after the electrolysis. In order to ensure complete exchange of solution it is necessary to flush the beaker with a volume several times the sample volume. Said method is solution-consuming and difficult to handle where separate sample beakers are applied.

The object of the invention is to provide a method of electrochemical stripping analysis overcoming the above drawbacks in a simple manner.

This is obtained by the method according to the invention which is characteristic in placing the sample solution in a sample container, and contacting the electrode device with the sample solution by dipping the electrode device into the solution, the measuring area of the electrode device being located at an outer surface and having a surface character appropriate for retaining an aqueous sample residue at said surface in an amount sufficient to maintain electric contact between the working electrode and the contact point for the reference electrode and the counter electrode after removal of electrode device from the sample solution.

A preferred embodiment of the method according to the invention is characteristic in that the sample residue retained at the measuring area surface of the electrode device completely covers the part of the working electrode opening into the measuring area.

The method according to the invention is advantageous in that the working electrode is protected by the sample residue retained at the surface of the measuring area on removal of the electrode device from the sample solution. The working electrode is protected from damage of the measuring area caused by uncontrolled electrode potential, as said potential is controlled through the presence of the sample residue. The working electrode is also protected from contamination and drying out due to contact with the ambient air.

By means of the method according to the invention it is possible at first to perform electrolysis in a sample and subsequently move the electrode device to a particular solution wherein the stripping is performed. A solution having a low content of redox-active substances may be selected as stripping solution, thus essentially lowering the otherwise high stripping rate.

Further, in the method according to the invention electrolysis and/or stripping may be performed in a sample residue retained at the electrode device rather than in the entire sample/other solution. In stripping it is a further advantage that absolute quiescence in the residue retained at the measuring area surface is obtained quickly after removal of the electrode device from the solution. Thus, the transport rate of oxidant/reductant to the electrode surface is lowered and the stripping rate is further lowered.

The invention further relates to an electrode device for use in the method according to the invention and comprising an electrode body carrying a working electrode, a reference electrode, and a counter electrode, and further comprising a measuring area into which the working electrode opens and wherein at least one contact point for the reference electrode and the counter electrode is located, said electrode device being characteristic in that the electrode device is a dipping electrode device, and that the measuring area is located at an outer surface and has a surface character appropriate for retaining an aqueous sample residue at said surface in an amount sufficient to maintain electric contact between the working electrode and the contact point for the reference electrode and the counter electrode after removal of the electrode device from the sample solution.

In non-critical usage of the electrode device according to the invention, e.g. in analyses not requiring an exactly determined working electrode potential, the reference electrode and the counter electrode may comprise one and the same electrode.

The electrode body must carry the electrodes without establishing direct electric contact between the electrodes through said body. The electrode body may e.g. comprise a hollow body adapted to contain one or several of the electrodes and possibly a relating electrolyte fluid or the body may comprise a massive body upon which the electrodes are secured.

The contact points located in the measuring area of the electrode device may comprise parts of the electrodes proper, but may also comprise particular areas, an electrically conducting fluid bridge being formed from said areas to the two electrodes via a liquid junction means.

In this context a dipping electrode device is to be interpreted as an electrode device adapted for dipping into a sample solution contained in a beaker. Dipping of the electrode device into the solution is performed by relatively displacing the electrode device and the beaker.

The measuring area of the electrode device into which the working electrode opens may be configured in several embodiments. As mentioned above the reference electrode and the counter electrode may open into said area, or particular liquid junction means may be located in the area establishing electric contact between the two electrodes and the measuring area. The surface of the area must retain a sample solution residue when removing the electrode device after dipping into the solution. Said retaining ability may be established in several ways. In the simplest case, the measuring area surface comprises a protrusion provided at the lower end of the electrode device. Said protrusion has the shape of an upright bowl carrying the sample residue.

Alternatively, the measuring area surface of the electrode device may comprise a downward facing by and large plane surface. Thus, the retainment of the sample residue at the surface is determined by the adhesion between the sample residue and the measuring area surface, said surface preferably having a hydrophilic character.

In another embodiment the measuring area may be configured to retain the sample residue at the surface mainly by means of capillary forces. In this case, the working electrode and the other electrodes are located in the measuring area as close as to retain a sample residue between said electrodes. In a further embodiment the measuring area has a porous surface, thus absorbing and retaining a sample residue.

Usually, retainment of the sample residue to the measuring area surface is determined by a combination of the above-mentioned forces.

In case the sample residue is retained at a downward surface by means of adhesion and/or capillary forces, said forces must neutralize the gravity forces on the sample residue.

The size of the retained sample residue depends on e.g. the density and surface tension of the fluid and also on the adhesion forces between the sample residue and the measuring area surface. In case the measuring area comprises a bowl-shaped protrusion as mentioned above, the size of said bowl influences the size of the sample residue as well.

Any electrode device is adapted for use in a prescribed manner, e.g. to be held in one or several positions usual for said device. Some electrode devices may e.g. have a measuring area turning downwards during use, while others may have a measuring area arranged vertically or inclined during use. When mentioning above that a sample residue is retained at the measuring area surface, it is assumed that the electrode device is used in the prescribed manner.

The electrode device according to the invention is advantageous in that it may be manufactured in a size considerably smaller than the known electrode kits comprising several separate electrodes. Due to the smaller size of the electrode device, the sample volume required for measuring is smaller as well, and this is particularly valuable when only small amounts of sample are available. E.g. this situation exists when measuring on blood, where only a very limited amount of blood may be available from a patient.

Preferably, the working electrode of the electrode device is so separated from the counter and reference electrode that the working electrode does not open into the same space as the other two electrodes. In this context, the statement that the electrodes do not open into the same space means that the working electrode is not in direct contact with the fluid contacting the reference electrode and the counter electrode, not even when the electrode device is dipped into a sample or other solution. Thereby, a further advantage is obtained for the stripping procedure as the substances formed at the counter electrode cannot reach the working electrode and thus cannot interfere with and disturb the measurements.

In a particular embodiment the electrode device comprises a hollow electrode body filled with an electrolyte fluid, in which body the reference electrode and the counter electrode are located in direct contact with the electrolyte fluid and wherein the working electrode is located insulated from the electrolyte fluid and the other electrodes. Further, an electrically conducting liquid junction means is located in the electrode device insulated from the working electrode, said liquid junction means extending from the measuring area of the electrode device to the electrolyte fluid contained in the electrode body, thus forming an electric connection from the measuring area to the electrolyte fluid. When a sample residue is retained at the measuring area, said residue is in direct contact with the working electrode and at least a part of the liquid junction means, thus establishing electric contact between the working electrode and the other two electrodes through the sample residue, the electrically conducting liquid junction means, and the electrolyte fluid.

In a preferred embodiment the part of the working electrode opening into the measuring area of the electrode device comprises a glassy carbon component. If preferred, other chemical resistant conducting materials may be used such as a precious metal, e.g. Au, Pt, or a carbon polymeric composite.

Preferably, the counter electrode of the electrode device comprises an Ag wire or another chemical resistant conducting material such as a precious metal, e.g. Pt or Au, or carbon or glassy carbon.

In a further preferred embodiment the reference electrode comprises an Ag/AgCl electrode, a calomel electrode, or a corresponding reference system as disclosed in Bailey PL. Analysis with Ion-Selective Electrodes. London: Heyden & Son Ltd., 1976: 11-34.

In particular measurement types it is advantageous to use a single-use electrode device, e.g. when cleaning the electrode device between measurements is difficult or when heavy demands on the cleaning of the electrode device make said cleaning a very costly step. A preferred embodiment of a single-use electrode device comprises a substrate upon which the working electrode, the reference electrode, and the counter electrode are printed by means of film technique. The substrate has a slot forming the measuring area of the electrode device and into which said electrodes open electrically insulated from each other. The slot is configured to retain a sample residue in direct contact with each of said electrodes. When a sample residue is retained in the slot, electric contact is established between said three electrodes through said sample residue.

In this context, film technique comprises all manufacturing methods connecting layers by joining, pressing, gluing, or possibly by depositing one or several layers, and thus comprises both thick film technique and thin film technique.

Preferably, the electrode carrying substrate is made of polycarbonate or a corresponding insulating material, such as ceramic or plastic, e.g. polyethylene or polyvinyl chloride.

The invention will be further described below with reference to the drawings and the subsequent examples. In the drawings:
Fig. 1 is a block diagram of a system for performing electrochemical stripping analysis, explaining the relation between the system and an electrode device according to the invention;
Fig. 2 is a schematic section of a first embodiment of an electrode device according to the invention;
Fig. 3 is a schematic section of a second embodiment of an electrode device according to the invention;
Fig. 4 is a schematic view of a third embodiment of an electrode device according to the invention;
Fig. 5 shows results obtained from measurements of Ni(II) in double-distilled water, using the electrode device according to the invention. The curves depict the time that the working electrode remains at a particular potential during stripping as a function of the potential;
Fig. 6 shows results obtained from measurements of Co(II) in double-distilled water, using the electrode device according to the invention. The curves depict the time that the working electrode remains at a particular potential during stripping as a function of the potential;
Fig. 7 shows results obtained from measurements of Ni(II) in double-distilled water containing Zn, using the electrode device according to the invention. The curves depict the time that the working electrode remains at a particular potential during stripping as a function of the potential; and
Fig. 8 shows results obtained from measurements of Ni(II) in double-distilled water, using a set of electrodes comprising three separate electrodes. The curves depict the time that the working electrode remains at a particular potential during stripping as a function of the potential.

In the various figures like reference numerals are used to denote like parts.

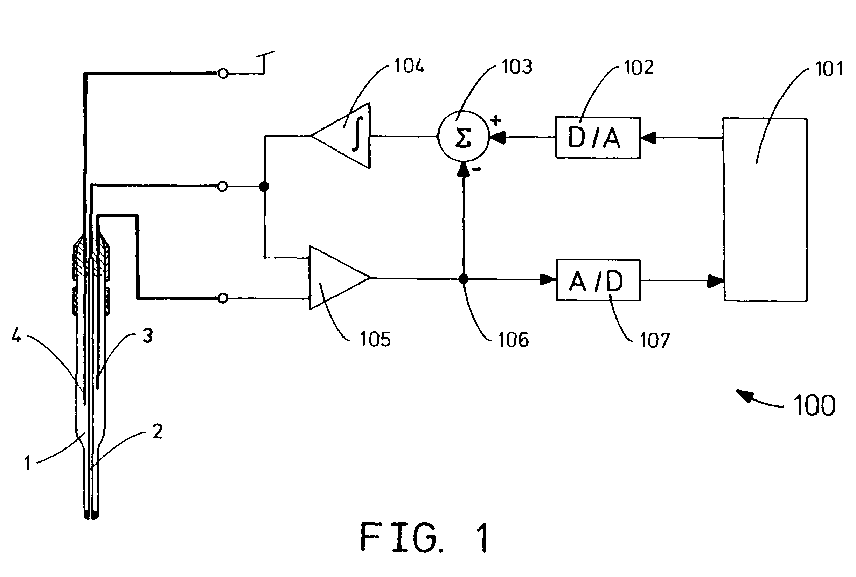

Fig. 1 shows a block diagram of an analysis system 100 for performing stripping analysis. The relation between the analysis system 100 and the electrodes of an electrode device 1 according to the invention is shown as well. The analysis system 100 largely corresponds to the system TraceLab™ for Potentiometric and Constant Current Stripping Analysis described above. The system 100 is controlled by a microprocessor 101. The microprocessor 101 is connected to a D/A converter 102 which further is connected to a summation point 103. The summation point 103 is connected to an integral circuit 104 which is further connected to the working electrode 2 of the electrode device 1. The working electrode 2 and the reference electrode 3 of the electrode device 1 are both connected to an amplifier 105 amplifying the electrode signals. The amplifier 105 is connected to a point 106 which also is connected to the summation point 103 in order that the voltage difference between the working electrode 2 and the reference electrode 3 be compared with and adjusted to the correct electrolysis potential. The point 106 is further connected to an A/D converter 107 which is further connected to the microprocessor 101.

The microprocessor 101 is further connected to not shown means for setting the various analysis parameters, e.g. the electrolysis potential, the electrolysis time and the like, and to not shown means for displaying the measuring results, e.g. a printer, a plotter or the like.

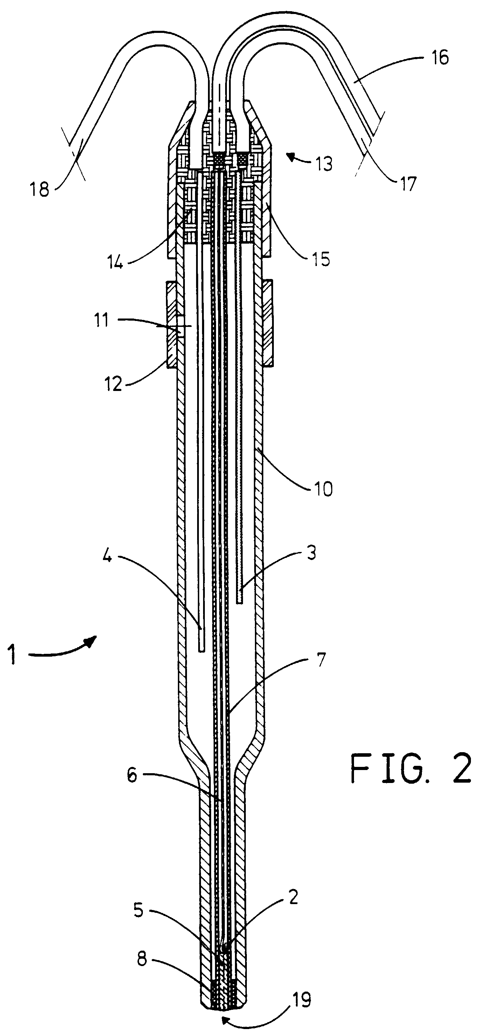

Fig. 2 shows a first embodiment of an electrode device according to the invention. The electrode device 1 comprises a hollow electrode body 10 of unleaded glass (average thickness 1.2 mm). In one end the electrode device 1 has an outer diameter of 12 mm over a distance of approx. 120 mm and in the opposite end has an outer diameter of 8.4 mm over a distance of 40 mm. The electrode body 10 comprises three electrodes, viz. a working electrode 2, a reference electrode 3, and a counter electrode 4. The interior of the electrode device 1 is designed to be filled with an electrolyte fluid, e.g. a solution of 0.5 M HCl, and for this purpose the electrode body 10 is provided with a filling hole 11 which upon filling is covered by a rubber cover 12, e.g. a rubber ring surrounding the entire electrode body 10. At the shown upper end 13 of the electrode device 1, an epoxy plug 14 free of heavy metal is embedded in the electrode body 10. The plug 14 secures electrically conducting cables 16, 17, and 18 connected to each of the electrodes 2, 3, and 4, respectively, and adapted to connect said electrodes with a related analysis system, e.g. the system 100 shown in Fig. 1. An electrode cap 15 made of an insulating plastic material, e.g. PVC, covers the epoxy plug 14 and the end 13, the electrode cables 16, 17, and 18 being led through said cap 15.

The working electrode 2 is located centrally inside the electrode device 1 and comprises a glassy carbon rod 5 (diameter 1.6 mm, length 12.0 mm). One end of the glassy carbon rod 5 opens into the measuring area 19 of the electrode device 1. The opposite end of the glassy carbon rod 5 is affixed to an electric conductor in the form of an Ag wire 6 (diameter 0.3 mm) by means of unleaded epoxy glue, the wire 6 further being connected to the cable 16 in the epoxy plug 14. The working electrode 2 is throughout its length surrounded by a glass tube 7 (thickness 0.9 mm) to the inside of which the glassy carbon rod 5 is affixed. The glass tube 7 ensures total insulation between the working electrode 2 and the remaining electrolyte-containing interior of the electrode device 1. The end of the working electrode 2 opening into the measuring area 19 is secured in the electrode body 10 by means of a liquid junction means in the form of a porous circular ring 8, said ring 8 extending from the measuring area 19 and along approx. half the length of the glassy carbon rod 5 filling up the space between the outer side of the glass tube 7 and the inside of the electrode body 10.

The reference electrode 3 constituted by an Ag wire (diameter 0.5 mm) coated with AgCl and the counter electrode 4 constituted by an Ag wire (diameter 1.0 mm) are both located inside the electrolyte-containing section of the electrode body 10. Thus, they are in direct contact with the electrolyte, but not with the working electrode 2. In the epoxy plug 14, the reference electrode 3 and the counter electrode 4 are connected with the cables 17 and 18, respectively.

When the measuring area 19 is lowered into an electrolyte-containing fluid, electric contact is established via the porous ring 8 and the electrolyte fluid in the electrode body 10 between the working electrode 2 and the two other electrodes, the reference electrode 3, and the counter electrode 4, as in this embodiment the section of the porous ring 8 located in the measuring area 19 constitutes a contact point for the reference electrode and the counter electrode. The measuring area 19 is proportioned and designed in such a manner that when lifting up the electrode device 1 from a sample solution, a drop is left hanging in the measuring area 19 covering the entire working electrode 2 and at least part of the porous ring 8. Thus, the electrode device 1 will be in contact with the sample even upon removal from the sample solution, and the electrodes 2, 3 and, 4 will be in mutual electric contact.

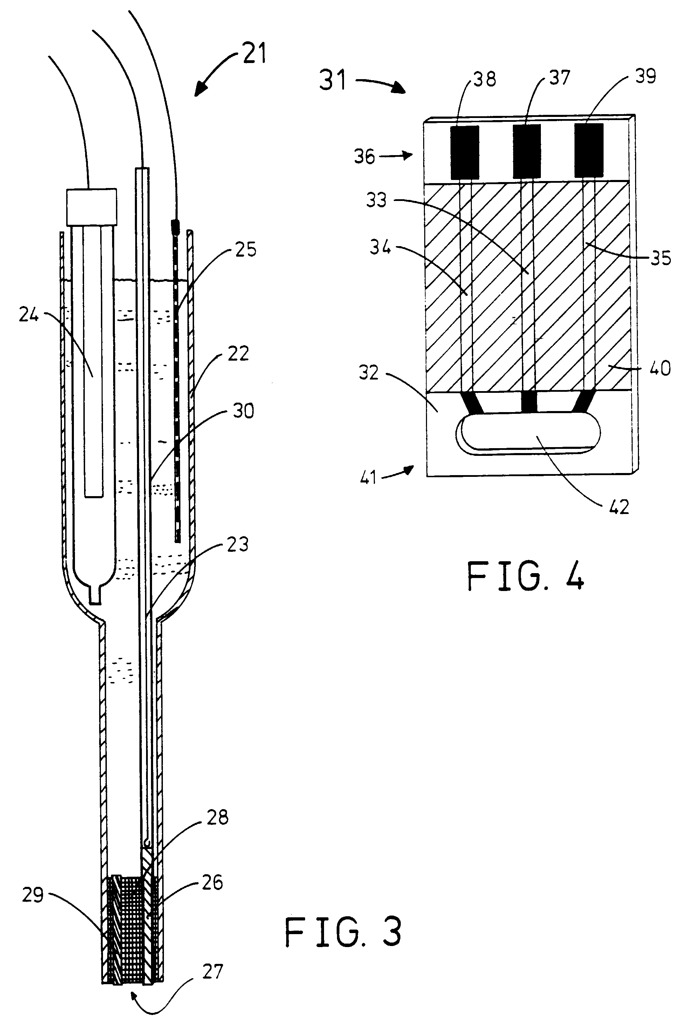

Fig. 3 shows another embodiment of an electrode device according to the invention used in performing the measurements described below. The electrode device 21 comprises an electrode body 22 provided by cutting out a 20 ml glass pipette. The electrode body 22 comprises three electrodes, viz. a working electrode 23, a reference electrode 24, and a counter electrode 25 as the electrode device 1 described above in connection with Fig. 2. The electrode body 22 is filled with an electrolyte fluid in the form of 0.1 M solution of HNO₃. The working electrode 23 comprises a glassy carbon rod 26 (diameter 1 mm, length 8 mm), one end of which opens into the measuring area 27 of the electrode device 21. The opposite end of the glassy carbon rod 26 is affixed to an Ag wire (diameter 0.25 mm) by means of unleaded Ag-containing epoxy glue. The glassy carbon rod 26 is press fit into a predrilled hole in a teflon body 28 (diameter 5 mm, length 6 mm). The teflon body 28 is further provided with another predrilled hole into which a porous ceramic plug 29 (diameter 1 mm, length 6.5 mm) is press fit, the distance between the center of the glassy carbon rod 26 and the center of the porous plug 29 being approx. 2.5 mm. The teflon body 28 is glued into the electrode body 22 by means of epoxy. The working electrode 23 is located in a polyether ether ketone tube 30 (outside diameter 1.5 mm, approx. thickness 0.3 mm), thus insulating the working electrode 23 from the electrolyte fluid in the electrode body 22.

The reference electrode 24 constituted by a calomel electrode (type K436, Radiometer A/S, Copenhagen, Denmark) and the counter electrode 25 constituted by a Pt electrode (type P1312, Radiometer A/S, Copenhagen, Denmark) are both located in the electrolyte-containing section of the electrode body 22. Thus, they are in direct contact with the electrolyte, but not with the working electrode 23.

Similarly to the procedure described in connection with Fig. 2 above, electric contact is established between the three electrodes of the electrode device 21 via the porous plug 29 and the electrolyte fluid of the electrode body 22 when the measuring area 27 is covered with fluid. The measuring area 27 of the electrode device 21, as the measuring area 19 of the electrode device 1 is proportioned and designed in such a manner that when lifting up the electrode device 21 from a sample solution, a drop is left hanging in the measuring area 27 covering the entire working electrode 23 and at least part of the porous plug 29.

When performing stripping analysis without changing solution, i.e. when electrolysis as well as stripping are performed in the sample, it is also advantageous to use an electrode device designed similarly to one of the electrode devices 1, 21 of Figs. 2 and 3. The substances produced at the counter electrode 4, 25 during stripping cannot reach the working electrode 2, 23 and thus not disturb the measurements, as the working electrode 2, 23 and the counter electrode 4, 25 are not located in the same fluid.

In Fig. 4 is shown yet another embodiment of an electrode device according to the invention. The electrode device 31 which in respect of design differs somewhat from the electrode devices of Figs. 2 and 3 is provided by means of thick film technique. The electrode device 31 comprises a substrate 32 of polycarbonate onto which are located a working electrode 33 of carbon film, a reference electrode 34 of Ag/AgCl film, or another material having a stable potential, and a counter electrode 35 made of carbon film as well. One end 36 of the substrate 32, constituting the upper end of the electrode device during normal application, is provided with edge connectors 37, 38, and 39 in connection with the electrodes 33, 34, and 35, respectively, thus facilitating the connection of the electrode device 31 to a related analysis system. Across a major part of the substrate, the electrodes are covered by an electrically insulating layer 40 ensuring that any fluid spilt on the electrode device 31 does not cause a short circuit between the electrodes. The lower part 41 of the electrode device 31 constitutes the measuring end. At this end 41 the substrate 32 comprises an oblong slot 42 located in such a manner that all the measuring ends of the electrodes 33, 34, and 35 open at the edge of the slot 42. The size of the slot 42 is adapted in such a manner that when lifting up the electrode device 31 from a fluid, the slot 42 is able to hold a drop of fluid, said drop being in contact with all the electrodes 33, 34, 35. Thus, when a drop of fluid is "captured" in the slot 42, electric contact is established via the drop between the three electrodes 33, 34, and 35.

The proper dimensions for a thick film electrode device as the one described above are 50 mm in length and 10 mm in breadth, and the size recommended for the slot 42 is approx. 2 mm x 3 mm. The design of this electrode device 31 makes it most suitable for automated mass-production, and thus the electrode device 31 is useful as a single-use electrode device for analysis, e.g. in situations where cleaning the electrode device in between measuring on different samples may pose a problem. For the sake of clarification, the embodiment of Fig. 4 is somewhat distortedly drawn.

### Experimental Measurements

Four experiments were conducted, three of which were performed by means of an electrode device according to the invention and one by means of the set of electrodes relating to the TraceLab™ system described above. All experiments were conducted by means of the potentiometric stripping unit, PSU20, mentioned in the opening part in connection with The TraceLab™ System, Radiometer A/S, Copenhagen, Denmark. The potentiometric stripping unit was connected to an IBM™ compatible personal computer controlled by the special data processing program mentioned above for potentiometric stripping analysis, TAP2 TraceTalk, Method Builder and Commander.

An electrode device corresponding to the electrode device 21 described in connection with Fig. 3 was used for the three first experiments. The following solutions (all of analytical grade) were applied:
1) 0.1 M stock solution of dimethylglyoxime in 96 vol% ethanol;
2) a buffer solution (pH = 9.3) prepared from 90 ml 10 M NH₃ and 130 ml 9.5 M HCl diluted to 500 ml;
3) a solution for plating the working electrode with an Au film consisting of 5 mM Au(III) in 0.1 M HCl;
4) a solution for plating the working electrode with an Hg film consisting of 5 mM Hg(II) in 0.1 M HCl;
5) a stripping solution prepared by adding 0.1 ml of the stock solution 1) and 0.2 ml of the buffer solution 2) to 10 ml 5 M CaCl₂.

All the experiments were conducted according to the following method: The measuring surface of the electrode device was polished, first with an emery cloth, then with three different diamond pastes having particle diameters of 9, 3, and 1 µm, respectively. Subsequently, the electrode device was cleaned by wiping it with tissue soaked in ethanol. Preplating the electrode with an Au film was performed by dipping the electrode device into the plating solution 3) and applying the following potentials: +0.2 V for 20 s, 0 V for 20 s, and -0.2 V for 20 s. The electrode was further cleaned with ethanol and dipped into the plating solution 4) in order to apply an Hg film to the electrode device. The following potentials were applied: -0.3 V for 10 s, +0.2 V for 2 s, this sequence was repeated six times, then -0.5 V for 60 s, -0.7 for 60 s, and finally -0.9 V for 120 s, whereupon the potential was reduced to -1.0 V.

The electrode device was further cleaned with ethanol, dipped into the sample and lifted up immediately. The subsequent electrolysis step was performed in the drop left hanging on the measuring surface. The potentials and electrolysis times applied are stated below. In order to minimize precipitation of nickel in the stripping solution, the potential applied to the electrode device was set to -0.8 V, just before transferring the electrode device into the stripping solution. The electrode device was removed from the solution and after 5 s the drop left hanging on the measuring surface had become quiet. The stripping analysis was now performed in the solution drop by applying a constantly reducing current of 1.5 µA. The stripping step terminated as the potential across the electrode device reached -1.3 V where it was held for 5 s in order to allow the reaction products diffuse away from the measuring surface.

The interfering background signals were determined experimentally by applying yet another electrolysis potential of -0.8 V for 3 s upon stripping and then recording a background stripping curve.

### Determination of Ni(II)

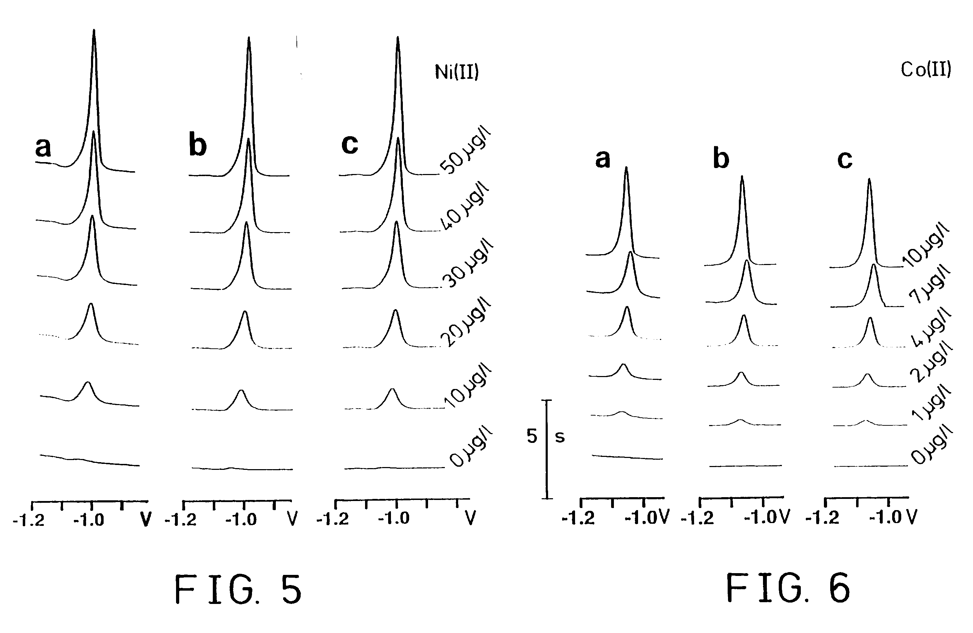

In the analysis procedure described above, analysis was performed on six samples of double-distilled water having a Ni(II) content of 0, 10, 20, 30, 40 and 50 µg/l, respectively. A potential of -0.6 V was applied for 20 s in performing the electrolysis. Fig. 5 shows the recorded stripping curves which depict the time that the working electrode remains at a particular potential during stripping as a function of the potential. Fig. 5a shows the uncorrected stripping curves, Fig. 5b shows the curves corrected with the experimentally determined background signals, and Fig. 5c shows the stripping curves corrected with arithmetically determined background signals.

As seen from Fig. 5, the background signals have a relatively rectilinear course and cause the stripping curves to slope, thus making background correction advisable. As also seen from Figs. 5b and c, background signals determined experimentally and arithmetically are both applicable for correction.

### Determination of Co(II)

As to Co(II), analysis was performed on six samples of double-distilled water having a Co(II) content of 0, 1, 2, 4, 7 and 10 µg/l, respectively. A potential of -0.85 V was applied for 120 s in performing the electrolysis. Fig. 6 shows the recorded stripping curves which depict the time that the working electrode remains at a particular potential during stripping as a function of the potential. Fig. 6a shows the uncorrected stripping curves, Fig. 6b shows the curves corrected with the experimentally determined background signals, and Fig. 6c shows the stripping curves corrected with arithmetically determined background signals.

### Determination of Ni(II) in a Sample comprising Zn(II) as Interference

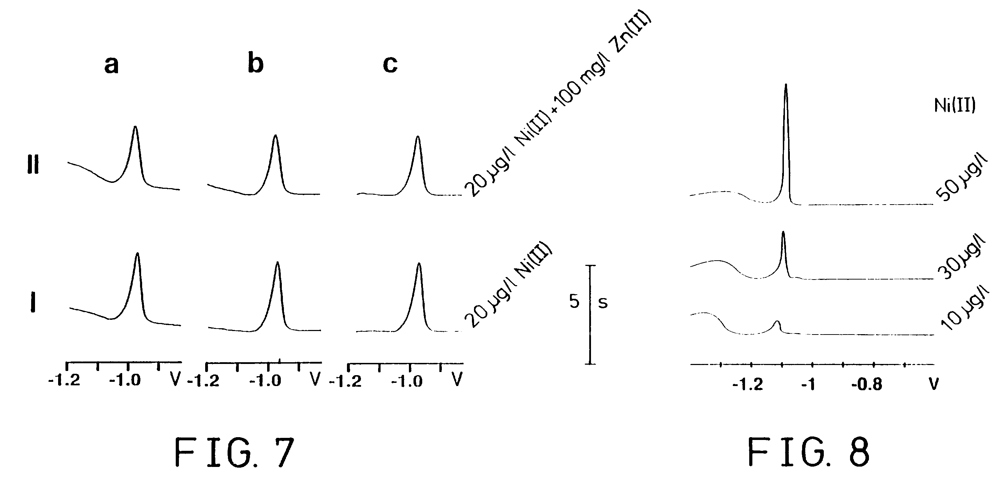

Fig. 7 shows stripping curves of two analyses, analysis I and analysis II on samples containing 20 µg/l of Ni(II). In analysis II, the sample further contained 100 mg/l Zn(II). Analysis I and analysis II were performed as described above in connection with Fig. 5. As mentioned above, a denotes the uncorrected stripping curves, b the curves corrected with background signals determined experimentally, and c the stripping curves corrected with arithmetically determined background signals.

When comparing the curves of analysis I and analysis II it appears that contamination of the sample with Zn(II) has no significant influence on the stripping peaks derived from Ni(II). By exchanging solution prior to the performance of stripping in the analysis procedure, it is, as seen from Fig. 7, thus possible to determine Ni(II) in samples having a Zn(II) content five thousand times greater than that of Ni(II) - yet without background correction of the stripping curves.

### Determination of Ni(II)by Means of a Set of Separate Electrodes

Analysis was performed by means of a set of electrodes relating to the TraceLab™ system and comprising a glassy carbon working electrode (type F3600), a calomel reference electrode (type K436), and a Pt counter electrode (type P136) on three samples of double-distilled water having a Ni(II) content of 10, 30 and 50 µg/l, respectively. The analysis procedure involved both electrolysis and stripping in the samples as is the normal procedure for this set of electrodes. Prior to measuring, an Hg film was applied to the working electrode in accordance with the procedure relating to this electrode. A potential of -0.6 V was applied to the working electrode for 20 s while stirring the sample. Then the stirring was stopped, but the potential was maintained for additionally 30 s until the sample had become relatively quiet. Accordingly, the total electrolysis time spent in this experiment amounted to 50 s, and this is 2.5 times the electrolysis time in the experiment mentioned above in connection with Fig. 5. Subsequently, the stripping step was performed in the sample by applying a constantly reducing current of 50 µA, and measuring was terminated as the working electrode potential reached -1.4 V.

Fig. 8 shows the stripping curves relating to this experiment, but without background correction. Comparing these curves with the curves of Fig. 5a, it appears that the rate of stripping is considerably greater when stripping is performed in the sample than when performing stripping in the special stripping solution 5) described, when considering the electrolysis time spent in the two experiments. As mentioned previously, the considerably greater rate of stripping put heavy demands on the analysis system in order to provide sufficiently accurate analysis results.

Moreover, when stripping is performed in the sample the measuring signals are disturbed much more by the background signals, cf. the "bulges" of the potential around -1.3 V of Fig. 8, than when stripping is performed in the special stripping solution, cf. Fig. 5a. This is due to the content of dissolved atmospheric oxygen being higher in the sample than in the special stripping solution. In order to perform measurements of sufficient accuracy, correction of these background signals is necessary; this is difficult, however, as the disturbances of the curves are not rectilinear, but relatively "bulgy".

In the measurements described above performed by means of the electrode device of Fig. 2, the drop left hanging on the measuring surface of the electrode device had an average size of 50 µl. This drop was transferred to 10 ml of stripping solution corresponding to a dilution of 200 times. However, as the stripping solution was very viscid and as the rate of diffusion of the ions thus became approx. 25 times lower than in the sample, the perceptible dilution was in the order of 5000 times. The influence of the analyte content of the sample drop on the stripping solution is therefore negligible.

By means of a specially designed sample station is has shown possible to measure on sample volumes as low as 500 µl, when using an embodiment of the electrode device as shown in Fig. 1. In said sample station, the stirring of the sample is performed by rotating the sample beaker and the displacement of the electrode device relatively to the beaker is strictly guided in order to avoid the sample drop left hanging on the measuring surface hitting the sample beaker when lifting up the electrode device. It is considered likely that after further modification of the electrode device and the mating sample station, it will be possible to measure on even smaller sample volumes, presumably on samples as low as 200 µl.

## Claims

1. Method of electrochemical stripping analysis comprising an electrolysis step and a stripping step and using an electrode device comprising an electrode body carrying a working electrode, a reference electrode, and a counter electrode, said electrode device further comprising a measuring area into which the working electrode opens and wherein at least one contact point for the reference electrode and the counter electrode is located,
the method comprising contacting the electrode device with a sample solution and performing the electrolysis step with the measuring area contacting at least part of the sample solution,
**characterized** in
placing the sample solution in a sample container, and contacting the electrode device with the sample solution by dipping the electrode device into the solution, the measuring area of the electrode device being located at an outer surface and having a surface character appropriate for retaining an aqueous sample residue at said surface in an amount sufficient to maintain electric contact between the working electrode and the contact point for the reference electrode and the counter electrode after removal of the electrode device from the sample solution.

2. Method according to claim 1,
**characterized** in,
that the sample residue retained at the measuring area surface of the electrode device completely covers the part of the working electrode opening into the measuring area.

3. Electrode device for use in the method according to claim 1 or 2 comprising an electrode body carrying a working electrode, a reference electrode, and a counter electrode, and further comprising a measuring area into which the working electrode opens and wherein at least one contact point for the reference electrode and the counter electrode is located,
**characterized** in,
that the electrode device is a dipping electrode device, and
that the measuring area is located at an outer surface and has a surface character appropriate for retaining an aqueous sample residue at said surface in an amount sufficient to maintain electric contact between the working electrode and the contact point for the reference electrode and the counter electrode after removal of the electrode device from the sample solution.

4. Electrode device according to claim 3,
**characterized** in,
that the working electrode is so separated from the counter and reference electrode that the working electrode does not open into the same space as the other two electrodes.

5. Electrode device according to claim 4,
**characterized** in,
that it comprises a hollow electrode body filled with an electrolyte fluid, in which body the reference electrode and the counter electrode are located in direct contact with the electrolyte fluid and wherein the working electrode is located insulated from the electrolyte fluid and the other electrodes,
that an electrically conducting liquid junction means is located in the electrode device insulated from the working electrode, said liquid junction means extending from the measuring area of the electrode device to the electrolyte fluid contained in the electrode body, thus forming an electric connection from the measuring area to the electrolyte fluid, and
that a sample residue retained at the measuring area is in direct contact with the working electrode and at least a part of the liquid junction means.

6. Electrode device according to any of claims 3 - 5,
**characterized** in,
that the part of the working electrode opening into the measuring area of the electrode device comprises a glassy carbon component.

7. Electrode device according to any of claims 3 - 6,
**characterized** in,
that the counter electrode comprises an Ag wire.

8. Electrode device according to any of the preceding claims,
**characterized** in,
that the reference electrode comprises an AgCl coated Ag wire or a calomel electrode.

9. Electrode device according to claim 3,
**characterized** in,
that the electrode body comprises a substrate upon which the working electrode, the reference electrode, and the counter electrode are printed by means of film technique,
that said substrate has a slot forming the measuring area of the electrode device and into which said electrodes open electrically insulated from each other, and
that said slot is configured to retain a sample residue in direct contact with each of said electrodes.

10. Electrode device according to claim 9,
**characterized** in,
that said substrate is made of polycarbonate, that the working electrode and the counter electrode each comprises a carbon film and that the reference electrode comprises a silver film.

## Patentansprüche

1. Verfahren zur Analyse durch elektrochemisches Stripping, mit einem Elektrolyseschritt und einem Strippingschritt, bei dem eine Elektrodenvorrichtung mit einem Elektrodenkörper verwendet wird, der eine Arbeitseleketrode, eine Bezugselektrode und eine Gegenelektrode trägt, wobei die Elektrodenvorrichtung ferner einen Meßbereich aufweist, in den die Arbeitselektrode reicht und in dem zumindest ein Kontaktpunkt für die Bezugselektrode und die Gegenelektrode angeordnet ist, wobei bei dem Verfahren die Elektrodenvorrichtung mit einer Probenlösung in Kontakt gebracht und der Elektrolyseschritt unter Kontakt des Meßbereiches mit zumindest einem Teil der Probenlösung durchgeführt wird, dadurch gekennzeichnet, daß die Probenlösung in einen Probenbehälter eingebracht und die Elektrodenvorrichtung mit der Probenlösung in Kontakt gebracht wird, indem die Elektrodenvorrichtung in die Lösung getaucht wird, wobei der Meßbereich der Elektrodenvorrichtung an einer Außenoberfläche angeordnet ist und eine Oberflächenbeschaffenheit aufweist, die geeignet ist, einen wäßrigen Probenrückstand an dieser Oberfläche in einer Menge zurückzuhalten, die ausreichend ist, um den elektrischen Kontakt zwischen der Arbeitselektrode und dem Kontaktpunkt für die Bezugselektrode und die Gegenelektrode nach Entnahme der Elektrodenvorrichtung aus der Probenlösung aufrechtzuerhalten.

2. Verfahren nach Anspruch 1, dadurch gekennzeichnet, daß der an der Meßbereichsoberfläche der Elektrodenvorrichtung zurückgehaltene Probenrückstand denjenigen Teil der Arbeitselektrode vollständig bedeckt, der in den Meßbereich reicht.

3. Elektrodenvorrichtung zur Verwendung in dem Verfahren nach Anspruch 1 oder 2, mit einem Elektrodenkörper, der eine Arbeitselektrode, eine Bezugselektrode und eine Gegenelektrode trägt, und ferner mit einem Meßbereich, in den die Arbeitselektrode reicht und in dem zumindest ein Kontaktpunkt für die Bezugselektrode und die Gegenelektrode angeordnet ist, dadurch gekennzeichnet, daß die Elektrodenvorrichtung eine Tauchelektrodenvorrichtung ist, und daß der Meßbereich an einer Außenoberfläche angeordnet ist und eine Oberflächenbeschaffenheit aufweist, die geeignet ist, einen wäßrigen Probenrückstand an dieser Oberfläche in einer Menge zurückzuhalten, die ausreichend ist, um den elektrischen Kontakt zwischen der Arbeitselektrode und dem Kontaktpunkt für die Bezugselektrode und die Gegenelektrode nach Entnahme der Elektrodenvorrichtung aus der Probenlösung aufrechtzuerhalten.

4. Elektrodenvorrichtung nach Anspruch 3, dadurch gekennzeichnet, daß die Arbeitselektrode derart von der Gegenelektrode und der Bezugselektrode getrennt ist, daß die Arbeitselektrode nicht in denselben Raum wie die beiden anderen Elektroden reicht.

5. Elektrodenvorrichtung nach Anspruch 4, dadurch gekennzeichnet, daß sie einen hohlförmigen Elektrodenkörper aufweist, der mit einem Elektrolyten gefüllt ist, wobei in dem Körper die Bezugselektrode und die Gegenelektrode in unmittelbarem Kontakt mit dem Elektrolyten angeordnet sind, und in dem die Arbeitselektrode isoliert von dem Elektrolyten und den anderen Elektroden angeordnet ist, daß eine elektrisch leitende Flüssigkeitsverbindung in der Elektrodenvorrichtung angeordnet ist, das von der Arbeitselektrode isoliert ist, wobei sich die Flüssigkeitsverbindung von dem Meßbereich der Elektrodenvorrichtung zu dem in dem Elektrodenkörper enthaltenen Elektrolyten hin erstreckt, so daß eine elektrische Verbindung von dem Meßbereich zu dem Elektrolyten gebildet wird, und daß ein an dem Meßbereich zurückgehaltener Probenrückstand in unmittelbarem Kontakt mit der Arbeitselektrode und zumindest einem Teil der Flüssigkeitsverbindung steht.

6. Elektrodenvorrichtung nach einem der Ansprüche 3 bis 5, dadurch gekennzeichnet, daß derjenige Teil der Arbeitselektrode, der in den Meßbereich der Elektrodenvorrichtung reicht, eine glasartige Kohlenstoffkomponente aufweist.

7. Elektrodenvorrichtung nach einem der Ansprüche 3 bis 6, dadurch gekennzeichnet, daß die Gegenelektrode einen Ag-Draht aufweist.

8. Elektrodenvorrichtung nach einem der vorangegangenen Ansprüche, dadurch gekennzeichnet, daß die Bezugselektrode einen AgCl-beschichteten Ag-Draht oder eine Kalomel-Elektrode aufweist.

9. Elektrodenvorrichtung nach Anspruch 3, dadurch gekennzeichnet, daß der Elektrodenkörper ein Substrat aufweist, auf dem die Arbeitselektrode, die Bezugselektrode und die Gegenelektrode mittels einer Filmtechnik aufgedruckt sind, daß das Substrat einen den Meßbereich der Elektrodenvorrichtung bildenden Spalt aufweist, in den die Elektroden elektrisch voneinander isoliert reichen und daß der Spalt dazu ausgestaltet ist, einen Probenrückstand in unmittelbarem Kontakt mit jeder der Elektroden zurückzuhalten.

10. Elektrodenvorrichtung nach Anspruch 9, dadurch gekennzeichnet, daß das Substrat aus Polykarbonat gefertigt ist, daß die Arbeitselektrode und die Gegenelektrode jeweils einen Kohlenstoffilm aufweisen, und daß die Bezugselektrode einen Silberfilm aufweist.

## Revendications

1. Procédé d'analyse électrochimique par stripping comprenant une étape d'électrolyse et une étape de stripping et utilisant un dispositif à électrodes comprenant un corps d'électrodes portant une électrode de travail, une électrode de référence, et une contre-électrode, ledit dispositif à électrodes comprenant, de plus, une zone de mesure dans laquelle l'électrode de travail s'ouvre, et dans laquelle est placé au moins un point de contact pour l'électrode de référence et la contre-électrode,
le procédé comprenant la mise en contact du dispositif à électrodes avec une solution d'échantillon et réalisant l'étape d'électrolyse avec la zone de mesure en contact avec au moins une partie de la solution d'échantillon,
caractérisé par le placement de la solution d'échantillon dans un conteneur d'échantillon, et la mise en contact du dispositif à électrodes avec la solution d'échantillon par immersion du dispositif à électrodes dans la solution, la zone de mesure du dispositif à électrodes étant située sur une surface extérieure et ayant une nature de surface appropriée pour retenir un résidu d'échantillon aqueux sur ladite surface, en quantité suffisante pour maintenir le contact électrique entre l'électrode de travail et le point de contact pour l'électrode de référence et la contre-électrode, après retrait du dispositif à électrodes de la solution d'échantillon.

2. Procédé selon la revendication 1,
caractérisé en ce que
le résidu d'échantillon retenu à la surface de la zone de mesure du dispositif à électrodes recouvre complètement la partie de l'électrode de travail s'ouvrant dans la zone de mesure.

3. Dispositif à électrodes utilisable dans le procédé selon la revendication 1 ou 2, comprenant un corps d'électrodes portant une électrode de travail, une électrode de référence, et une contre-électrode, et comprenant, de plus, une zone de mesure dans laquelle l'électrode de travail s'ouvre et dans laquelle est placé au moins un point de contact pour l'électrode de référence et la contre-électrode,
caractérisé en ce que
le dispositif à électrodes est un dispositif à électrodes à immersion, et
en ce que la zone de mesure est placée sur une surface extérieure et a une nature de surface appropriée pour retenir un résidu d'échantillon aqueux sur ladite surface en quantité suffisante pour maintenir le contact électrique entre l'électrode de travail et le point de contact pour l'électrode de référence et la contre-électrode, après retrait du dispositif à électrodes de la solution d'échantillon.

4. Dispositif à électrodes selon la revendication 3,
caractérisé en ce que
l'électrode de travail est séparée de la contre-électrode et de l'électrode de référence de telle sorte que l'électrode de travail ne s'ouvre pas dans le même espace que les deux autres électrodes.

5. Dispositif à électrodes selon la revendication 4,
caractérisé en ce
qu'il comprend un corps d'électrodes creux rempli d'un fluide d'électrolyte, dans lequel corps l'électrode de référence et la contre-électrode sont placées en contact direct avec le fluide d'électrolyte, et où l'électrode de travail est placée isolée du fluide d'électrolyte et des autres électrodes,
en ce que des moyens de jonction liquide conducteurs sont placés dans le dispositif à électrodes isolés de l'électrode de travail, lesdits moyens de jonction liquide s'étendant entre la zone de mesure du dispositif à électrodes et le fluide d'électrolyte contenu dans le corps d'électrodes, formant ainsi une connexion électrique entre la zone de mesure et le fluide d'électrolyte,
et en ce qu'un résidu d'échantillon retenu sur la zone de mesure est en contact direct avec l'électrode de travail et au moins une partie des moyens de jonction liquide.

6. Dispositif à électrodes selon l'une quelconque des revendications 3 à 5,
caractérisé en ce que
la partie de l'électrode de travail s'ouvrant dans la zone de mesure du dispositif à électrodes comprend un composant en carbone vitreux.

7. Dispositif à électrodes selon l'une quelconque des revendications 3 à 6,
caractérisé en ce que
la contre-électrode comprend un fil en Ag.

8. Dispositif à électrodes selon l'une quelconque des revendications précédentes,
caractérisé en ce que
l'électrode de référence comprend un fil en Ag revêtu de AgCl ou une électrode de calomel.

9. Dispositif à électrodes selon la revendication 3,
caractérisé en ce que
le corps d'électrodes comprend un substrat sur lequel l'électrode de travail, l'électrode de référence et la contre-électrode sont imprimées au moyen d'un procédé à couches,
en ce que ledit substrat comporte une fente formant la zone de mesure du dispositif à électrodes et dans laquelle lesdites électrodes s'ouvrent isolées électriquement l'une de l'autre, et
en ce que ladite fente est configurée de manière à maintenir un résidu d'échantillon en contact direct avec chacune desdites électrodes.

10. Dispositif à électrodes selon la revendication 9,
caractérisé en ce que ledit substrat est en polycarbonate, en ce que l'électrode de travail et la contre-électrode comprennent chacune une couche de carbone, et en ce que l'électrode de référence comprend une couche d'argent.
